# EUROPEAN PATENT APPLICATION

(11) **EP 1 927 845 A1**
(43) Date of publication of application: **04.06.2008**
(21) Application number: 07022406.8
(22) Date of filing: 19.11.2007
(51) Int. Cl.: G01N 13/16, G12B 21/22

(54) **Cantilever holder and scanning probe microscope including the same**

(30) Priority: 29.11.2006 JP 2006321949
(71) Applicant: Olympus Corporation, Tokyo 151-0072 (JP)
(72) Inventor: Ue, Yoshihiro, Hachioji-shi Tokyo 192-8512 (JP)
(74) Representative: von Hellfeld, Axel

(57) **Abstract**

A cantilever holder includes a glass substrate (130) on which a cantilever chip (110) is to be placed, a holding stage (140) to hold the glass substrate (130), a vibrator (138) fixed to the lower surface of the glass substrate (130), and a holding mechanism to position and hold the cantilever chip (110) at a position opposing the vibrator (138) through the glass substrate (130). The holding mechanism includes a press member (120) to press the cantilever chip (110) against the glass substrate (130). The press member (120) includes a notch (122) that tightly fits with the support (113).

## Description

The present invention relates to a scanning probe microscope.

A scanning probe microscope (SPM) is an apparatus that scans a probe to obtain information on a specimen surface, and is a generic term for a scanning tunneling microscope (STM), an atomic force microscope (AFM), a scanning magnetic force microscope (MFM), a scanning capacitance microscope (SCaM), a scanning near-field optical microscope (SNOM), a scanning thermal microscope (SThM), and the like.

Above all, the AFM is the most popular apparatus, and includes, as main mechanisms, a cantilever having a probe at its free end, an optical displacement sensor to detect the displacement of the cantilever, and a scanner to scan the probe and a specimen relatively. As the optical displacement sensor, an optical lever type optical displacement sensor is employed most widely because of its simple arrangement and high displacement detection sensitivity. The optical lever type optical displacement sensor irradiates a beam having a diameter of about 2 µm to 10 µm to a cantilever. A change in direction of light reflected by the cantilever, which occurs in accordance with the warp of the lever, is detected by a two-segment detector or the like, and an electrical signal reflecting the displacement of the probe at the free end of the cantilever is output. An excitation mechanism comprising a piezoelectric element or the like excites the cantilever at a mechanical resonance frequency. A scanner is scanned in an X-Y direction while being controlled in a Z direction to keep the vibration amplitude at a constant value, thereby mapping and displaying the configuration of a specimen surface on a computer monitor.

The AFM attracts attention as it may allow the movement of a living specimen in a liquid to be observed at a resolution higher than that of an optical microscope. Conventionally, only the optical microscope allows the movement of a living specimen to be observed. With the optical microscope, however, it is difficult to observe a specimen with a resolution equal to or shorter than the light wavelength due to a diffraction limit. With an electron microscope, which can attain a high resolution on the order of nanometer, it is difficult to set a specimen in a liquid, so a living specimen in a liquid cannot be observed. In contrast to this, the AFM can be expected for a high resolution on the order of nanometer and allows a specimen to be observed even in a liquid.

For example, Jpn. Pat. Appln. KOKAI Publication No. 2005-274461 discloses an AFM to observe a living specimen in a liquid.

Development of a high-speed AFM that is aimed at acquiring an AFM observation image with a video rate has been studied. For high-speed image acquisition, downsizing of the cantilever is indispensable. The size of a cantilever that satisfies this condition is typically on the order of approximately 1-10 µm.

The present invention is directed, according to an aspect, to a cantilever holder for holding a cantilever chip. The cantilever holder includes a glass substrate on which a cantilever chip is to be placed, a holding stage to hold the glass substrate, a vibrator fixed to a lower surface of the glass substrate, and a holding mechanism to position and hold the cantilever chip at a position opposing the vibrator through the glass substrate. The holding mechanism includes a press member to press the cantilever chip against the glass substrate, and the press member includes a notch that tightly fits with part of the cantilever chip.

The present invention is directed, according to another aspect, to a scanning probe microscope including the above cantilever holder. The scanning probe microscope includes a glass substrate on which a cantilever chip is to be placed, a holding stage to hold the glass substrate, a vibrator fixed to a lower surface of the glass substrate, a holding mechanism to position and hold the cantilever chip at a position opposing the vibrator through the glass substrate, a specimen stage to hold a specimen, a scanner to scan the specimen stage, an observation optical system to observe the specimen including an objective lens, and a position adjustment mechanism to adjust a position of the holding stage along an optical axis of the objective lens. The holding mechanism includes a press member to press the cantilever chip against the glass substrate. The press member includes a notch that tightly fits with part of the cantilever chip. The objective lens includes a correction mechanism to correct aberration caused by a thickness of the glass substrate and a liquid supplied onto the glass substrate.

The invention can be more fully understood from the following detailed description when taken in conjunction with the accompanying drawings, in which:
FIG. 1 is a perspective view of a stage including a cantilever holder according to an embodiment of the present invention;
FIG. 2 is a plan view of the stage shown in FIG. 1;
FIG. 3 is a sectional view of the stage taken along the line III - III shown in FIG. 2;
FIG. 4 shows a cantilever chip to be held by the cantilever holder shown in FIGS. 1 to 3;
FIG. 5 shows in enlargement an end of a press member that presses the support of the cantilever chip;
FIG. 6 shows a conical groove formed in the lower surface of the height adjustment stage shown in FIGS. 1 to 3;
FIG. 7 shows an elongated groove formed in the lower surface of the height adjustment stage shown in FIGS. 1 to 3;
FIG. 8 shows a conventional example of a scanning probe microscope to which the stage including the cantilever holder shown in FIGS. 1 to 3 is applied;
FIG. 9 shows an optical lever type optical sensor mechanism included in the scanning probe microscope in FIG. 8; and
FIG. 10 shows in enlargement a transparent plate and its periphery of the scanning probe microscope in FIG. 8.

This embodiment is directed to a stage including a cantilever holder to hold a cantilever chip. Prior to an explanation of this embodiment, a conventional example of an atomic force microscope as a kind of scanning probe microscope to which this embodiment is applied will be described.

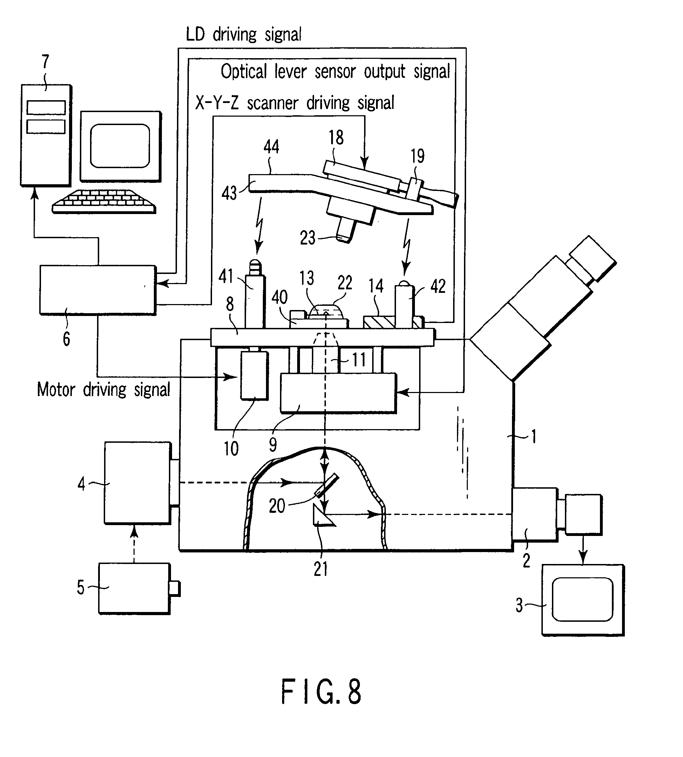

FIG. 8 shows the atomic force microscope (AFM) according to the conventional example. Referring to FIG. 8, the AFM has a cantilever 13, a cantilever holder 40 to hold the cantilever 13, a specimen stage 23 to hold a specimen thereon, an optical lever type optical sensor mechanism, a scanning mechanism, a Z coarse moving mechanism, a controller 6, and a computer 7. The optical lever type optical sensor mechanism includes a sensor optical system 9, an objective lens 11, and a position detector 14. The scanning mechanism includes a scanner holding stage 43, a scanner 18 to perform X-Y-Z scanning, and at least two micrometers 19 (FIG. 8 shows only one). The Z coarse moving mechanism includes two support members 42 (FIG. 8 shows only one) provided to a plate-like structure 8, a Z coarse moving guide 41 to coarsely move the scanning mechanism in the Z direction, and a Z coarse moving motor 10. The scanning mechanism, optical lever type optical sensor mechanism, and Z coarse moving mechanism are connected to the controller 6 and controlled by the computer 7. The computer 7 processes the measurement result, which may be displayed on a monitor TV.

The AFM includes an inverted optical microscope. The inverted optical microscope includes a microscope housing 1, an illumination light source lamp 4, a lamp power supply 5, a half mirror 20, a mirror 21, a CCD camera 2, and a TV monitor 3, and is mainly used for optical observation of a specimen and laser beam position adjustment between the cantilever 13 and the optical lever type optical sensor mechanism. In place of an ordinary stage, the plate-like structure 8 is attached to the microscope housing 1 and fixed to it. The objective lens 11 and sensor optical system 9 are arranged under the plate-like structure 8. The plate-like structure 8 supports the objective lens 11 so that the optical axis of the objective lens 11 is perpendicular to the plate-like structure 8. The objective lens 11 also serves as an objective lens for microscopic observation, and has the function of a condensing lens in the optical lever type optical sensor mechanism.

The cantilever 13 is arranged above the objective lens 11, and its displacement is measured by the optical lever type optical sensor mechanism. The cantilever holder 40 holds the cantilever 13 to be parallel to the plate-like structure 8. The cantilever holder 40 is provided with an excitation means (not shown), such as a piezoelectric element or the like, for exciting the cantilever 13 at its mechanical resonance frequency. A liquid 22 necessary for specimen observation is placed on the cantilever holder 40 by utilizing its surface tension.

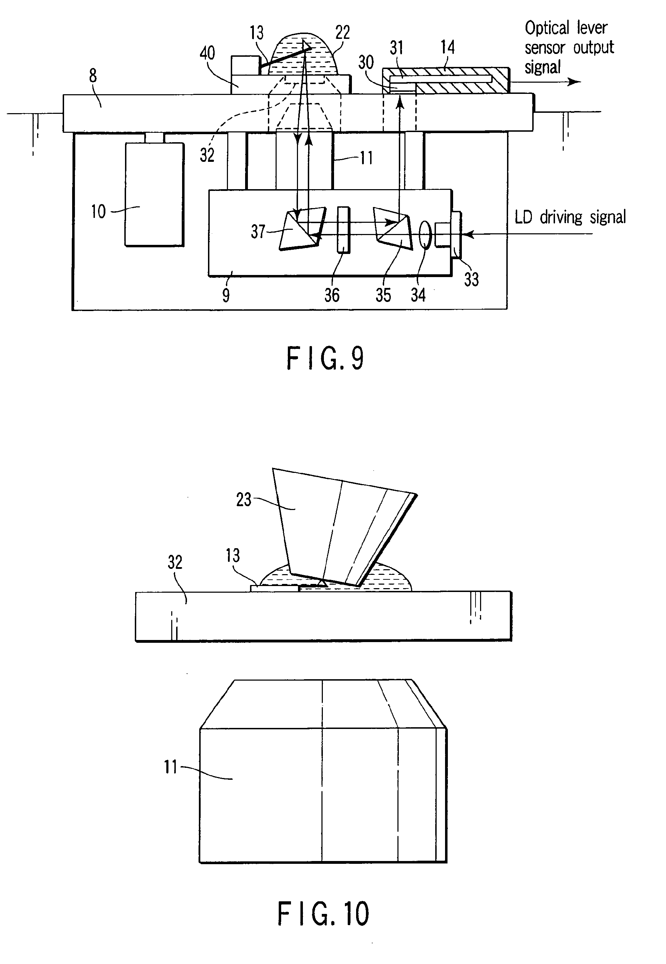

The optical lever type optical sensor mechanism will be described with reference to FIG. 9. The optical lever type optical sensor mechanism includes the sensor optical system 9 comprising a semiconductor laser 33, a collimator lens 34, a polarizing beam splitter 35, a λ/4 plate 36, and a half mirror 37, the objective lens 11, and the position detector 14 arranged on the plate-like structure 8. The position detector 14 includes a two-segment or four-segment photodiode 30 and a preamplifier circuit board 31.

The collimator lens 34 collimates a laser beam emitted from the semiconductor laser 33 into parallel light. The polarizing beam splitter 35 transmits only one linearly polarized light component of the parallel light. The transmitted linearly polarized laser beam is changed into circularly polarized light by the λ/4 plate 36, reflected by the half mirror 37, and condensed by the objective lens 11 to fall on the cantilever 13 through a transparent plate 32 and the liquid 22. The laser beam reflected by the cantilever 13 travels to the transparent plate 32, objective lens 11, half mirror 37, and then to the λ/4 plate 36. The λ/4 plate 36 converts the circularly polarized light into linearly polarized light, and the polarizing beam splitter 35 reflects it so the reflected light reaches the position detector 14. When the tip of the cantilever 13 is displaced, this displacement is converted into a positional change of the laser beam spot on the photodiode 30, and an electrical signal corresponding to the change is supplied to the preamplifier circuit board 31. The preamplifier circuit board 31 converts the electrical signal into an optical lever sensor output signal, i.e., a displacement signal of the cantilever 13, and outputs it.

As shown in FIG. 8, the scanner 18 is held with an inclination of, e.g., 8° with respect to a surface 44 of the scanner holding stage 43. Although the inclination is 8° herein, it may be of any value within the range of approximately 5° to 10°. The scanner 18 is provided with the specimen stage 23. The specimen stage 23 is coarsely moved by the micrometers 19 through the scanner 18 within a plane having an inclination of 8° with respect to the surface 44 of the scanner holding stage 43.

The Z coarse moving mechanism, which supports the scanning mechanism by the support members 42 and Z coarse moving guide 41 at three points, coarsely drives the scanning mechanism in the Z direction perpendicular to the plate-like structure 8 by stretching or contracting the Z coarse moving guide 41 by the Z coarse moving motor 10.

A stage including a cantilever holder according to an embodiment of the present invention will now be described.

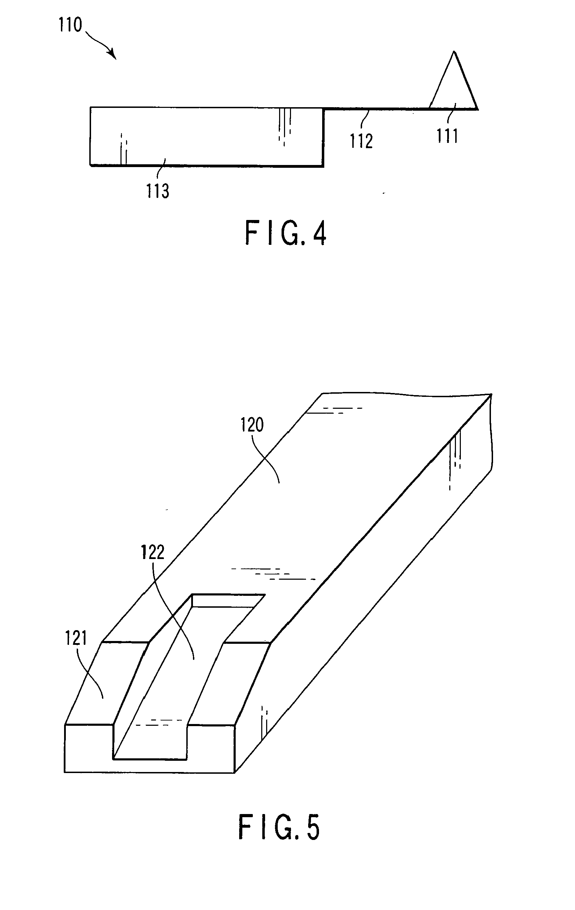

As shown in FIG. 4, a cantilever chip 110, which is held by the cantilever holder, has a probe 111, a cantilever 112 supporting the probe 111, and a support 113 supporting the cantilever 112. The probe 111 has a sharp tip. The cantilever 112 is supported at one end by the support 113 and has the probe 111 at its free end. The cantilever 112 is flexible and elastically deforms in accordance with a force acting on the probe 111.

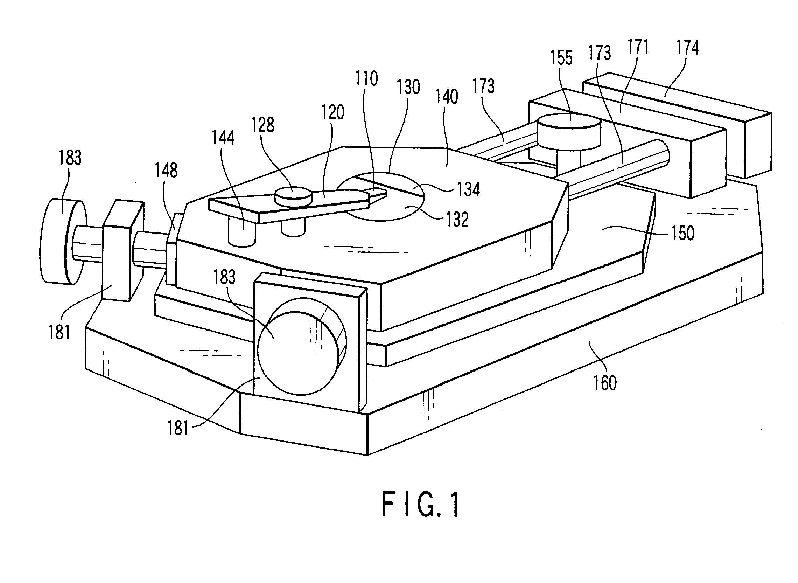

As shown in FIGS. 1 to 3, the cantilever holder according to this embodiment has a glass substrate 130 on which the cantilever chip 110 is to be placed, a holding stage 140 to hold the glass substrate 130, a vibrator 138 fixed to a lower surface 136 of the glass substrate 130, and a holding mechanism to position and hold the cantilever chip 110 at a position opposing the vibrator 138 through the glass substrate 130.

The holding mechanism includes a press member 120 to press the support 113 of the cantilever chip 110 with one end (to be referred to as the first end hereinafter for the sake of convenience), a fulcrum member 128 that engages the press member 120 with the holding stage 140, and a plunger 144 that biases the other end (to be referred to as the second end hereinafter for the sake of convenience) of the press member 120 upward.

As shown in FIG. 5, the press member 120 has, at the first end, an inclined portion 121 formed by cutting for avoiding contact with the glass substrate 130, and a notch 122 that tightly fits with the support 113 of the cantilever chip 110.

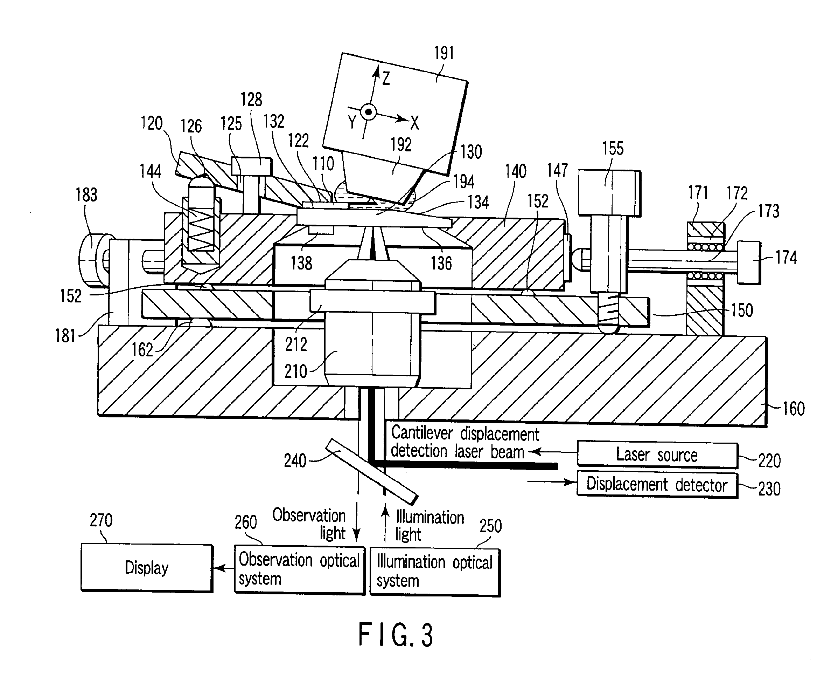

As shown in FIG. 3, the press member 120 has a through hole 125 formed near its center. The fulcrum member 128 extends through the through hole 125 of the press member 120 and is fixed to the holding stage 140. The fulcrum member 128 has an upper end with a diameter larger than that of the through hole 125 and suppresses the upward movement of the press member 120. The plunger 144 is screwed into the holding stage 140. The plunger 144 includes a main body having a hole, and a coil spring and a pin accommodated in series in the hole of the main body. The coil spring urges the pin upward. The press member 120 has, in its second end, a conical groove 126 that receives the spherical distal end of the pin of the plunger 144. The spherical distal end of the pin of the plunger 144 engages with the conical groove 126 of the press member 120. The plunger 144 pushes up the second end of the press member 120 about the fulcrum member 128 as the fulcrum, to push down the first end of the press member 120 toward the glass substrate 130.

The cantilever chip 110 is placed on a support surface 132 of the glass substrate 130 with the probe 111 directed upward. The support 113 of the cantilever chip 110 is inserted in the notch 122 of the press member 120 completely, i.e., until it abuts against the deep end of the notch 122. The notch 122 regulates the movement of the cantilever chip 110 along the support surface 132, so that the cantilever chip 110 is positioned. The press member 120 urges the support 113 against the glass substrate 130, thereby fixing the cantilever chip 110. The compression amount of the coil spring of the plunger 144 determines the fixing strength of the cantilever chip 110.

The space between a specimen stage 192 and the glass substrate 130 located around the probe 111 of the cantilever chip 110 is filled with liquid 194 such as a culture medium in order to hold an observation specimen such as a protein or an organic compound so as to allow them to function.

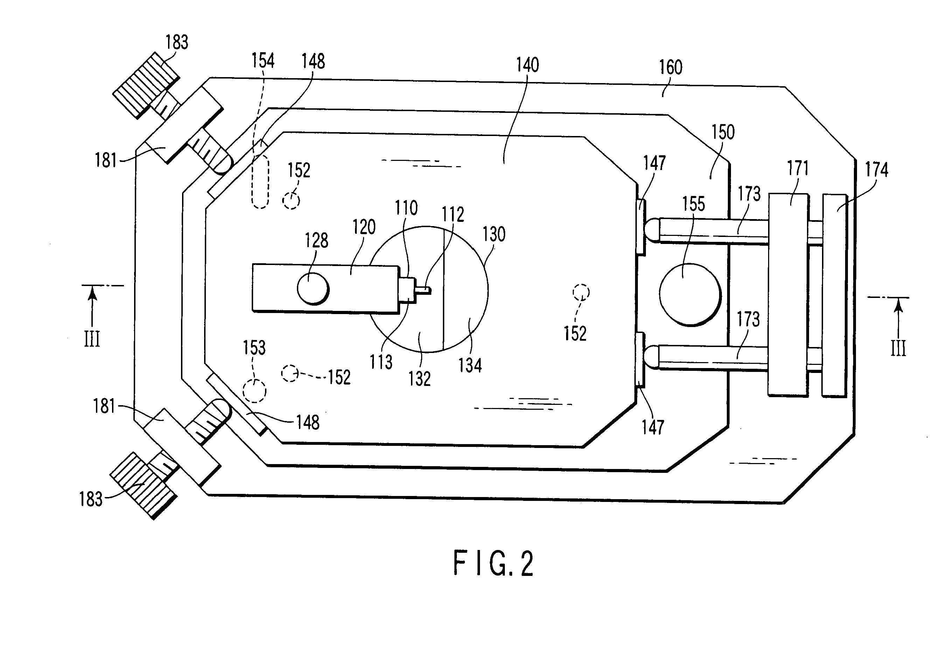

As shown in FIGS. 1 and 2, the glass substrate 130 has the support surface 132 on which the cantilever chip 110 is to be placed, and an inclined surface 134 extending continuously from the support surface 132 and being inclined with respect to the support surface 132. As is apparent from FIG. 2, the inclined surface 134 is located on that side of the support surface 132 where the cantilever 112 of the cantilever chip 110 positioned and held by the holding mechanism extends from the support 113. As is apparent from FIG. 3, the inclined surface 134 is inclined with respect to the support surface 132 to a side where the distance from the probe 111 increases. The support surface 132, inclined surface 134, and lower surface 136 of the glass substrate 130 are mirror-finished and provided with anti-reflection films.

The stage has, in addition to the holder, a height adjustment stage 150 to support the holder, a stationary stage 160 to support the height adjustment stage 150, a horizontal moving mechanism to move the holder horizontally with respect to the stationary stage 160, and a height adjustment mechanism to move the holder vertically with respect to the stationary stage 160.

The stationary stage 160 has an opening at its center. An objective lens 210 is fixed in this opening. The objective lens 210 includes a correction ring 212 to correct aberration caused by the thickness of the glass substrate 130 and by the liquid 194. The stationary stage 160 includes two support pins 162 projecting upward from the upper surface.

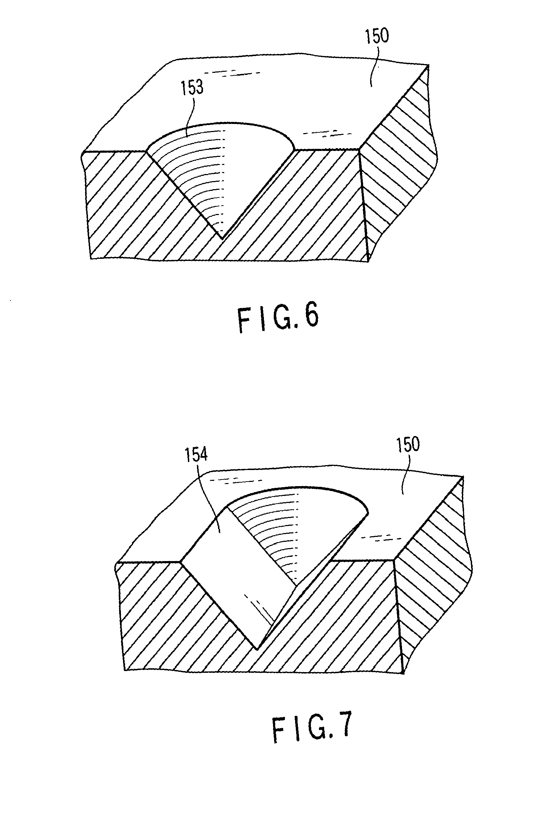

The height adjustment stage 150 has, at its center, an opening through which the objective lens 210 extends. The height adjustment stage 150 has, in its lower surface, a conical groove 153 (shown in FIG. 6) and an elongated groove 154 (shown in FIG. 7), which respectively receive the two corresponding support pins 162. The height adjustment stage 150 is arranged above the stationary stage 160 with the conical groove 153 and elongated groove 154 being engaged with the support pins 162 provided to the stationary stage 160. The height adjustment stage 150 is provided with a height adjustment screw 155 at a position away from the support pins 162. The distal end of the height adjustment screw 155 projects downward through the height adjustment stage 150 to come into contact with the upper surface of the stationary stage 160. The two support pins 162 and height adjustment screw 155 support the height adjustment stage 150 to be above the stationary stage 160.

The height adjustment screw 155 is a feed screw. The projection amount of the distal end of the height adjustment screw 155 from the height adjustment stage 150 changes in accordance with the rotating operation. The screw pitch of the height adjustment screw 155 is preferably 0.25 mm or less. Upon rotating operation of the height adjustment screw 155, the height adjustment stage 150 vertically moves with respect to the stationary stage 160. More specifically, the height adjustment screw 155 constitutes a height adjustment mechanism to move the holder supported by the height adjustment stage 150 vertically with respect to the stationary stage 160. Upon rotating operation of the height adjustment screw 155, the height adjustment stage 150 pivots about, precisely, the support pins 162 as the fulcrum. As the distances between the support pins 162 and the height adjustment screw 155 are large, the inclination of the height adjustment stage 150 can be substantially negligible.

The height adjustment stage 150 further has three support pins 152 on its upper surface. The holding stage 140 is arranged above the height adjustment stage 150 and supported by the three support pins 152. The holding stage 140 has an opening for accommodating the objective lens 210 at its center. The glass substrate 130 is attached to the holding stage 140 to close the upper end of the opening.

The stationary stage 160 is provided with a linear guide fixing member 171 including two linear guides 172. The linear guide fixing member 171 supports two parallel support members 173 through the linear guides 172. A connecting member 174 is connected to the two parallel support members 173. The parallel support members 173 are allowed to move linearly with respect to the linear guide fixing member 171 along the linear guides 172. The parallel support members 173 have distal ends made of a material such as iron that is attracted to a magnet. The holding stage 140 has magnets 147 fixed at such positions that the distal ends of the corresponding parallel support members 173 are in contact with the magnets 147. The distal ends of the parallel support members 173 are in contact with the magnets fixed to the holding stage 140. The magnets 147 are kept in contact with the distal ends of the parallel support members 173.

The stationary stage 160 is provided with two adjustment screw support members 181 that respectively support two adjustment screws 183. The adjustment screws 183 are feed screws. The projection amounts of the distal ends of the adjustment screws 183 from the adjustment screw support members 181 change in accordance with the rotating operation. The screw pitch of each adjustment screw 183 is preferably 0.25 mm or less. The two adjustment screws 183 extend perpendicularly to each other. The distal end of each adjustment screw 183 is made of a material such as iron that is attracted to a magnet. The holding stage 140 has magnets 148 fixed at such positions that the distal ends of the adjustment screws 183 are in contact with the corresponding magnets 148. The distal ends of the adjustment screws 183 are in contact with the magnets 148 fixed to the holding stage 140. The magnets 148 are kept in contact with the distal ends of the adjustment screws 183.

When one adjustment screw 183 is rotated, the adjustment screw 183 moves forward/backward with respect to the corresponding adjustment screw support member 181. As the adjustment screw 183 moves forward/backward, the holding stage 140 moves with respect to the stationary stage 160 in the forward/backward direction of the adjustment screw 183. The other adjustment screw 183 does not interfere with the movement of the holding stage 140, and the parallel support members 173 follow the movement of the holding stage 140. This also applies to a case when the other adjustment screw 183 is rotated. More specifically, upon necessary rotating operation of the two adjustment screws 183, the holding stage 140 arbitrary moves parallel to the stationary stage 160. Namely, the linear guide fixing member 171, linear guides 172, parallel support members 173, connecting member 174, adjustment screw support members 181, and adjustment screws 183 constitute a horizontal moving mechanism to move the holder parallel to the stationary stage 160.

As shown in FIG. 3, the specimen stage 192 to hold the specimen, and an X-Y-Z scanner 191 to scan the specimen stage 192 in the X, Y, and Z directions are arranged above the glass substrate 130. The specimen stage 192 and X-Y-Z scanner 191 are inclined with respect to the horizontal plane, i.e., the support surface 132 of the glass substrate 130. The lower surface of the specimen stage 192 is generally parallel to the inclined surface 134 of the glass substrate 130. The angle of inclination is, e.g., approximately 8°. The X-Y-Z scanner 191 is supported to be movable within the inclined plane for the purpose of alignment of the specimen held by the specimen stage 192 and the probe 111 of the cantilever chip 110. For example, the X-Y-Z scanner 191 is built in the scanning mechanism described with reference to FIG. 8, employed to replace the scanner 18, and held by the scanner holding stage 43.

A dichroic mirror 240 is arranged under the objective lens 210. The dichroic mirror 240 is inclined by 45° with respect to the horizontal plane. The dichroic mirror 240 reflects light having a wavelength near that of the cantilever displacement detection laser beam, and transmits light having other wavelengths.

The cantilever displacement detection laser beam emitted by a laser source 220 strikes the dichroic mirror 240 from a side. The laser beam that has struck the dichroic mirror 240 is reflected upward by the dichroic mirror 240, and then passes through the objective lens 210, so as to strike the distal end of the cantilever 112 of the cantilever chip 110. The light reflected by the distal end of the cantilever 112 is guided to a displacement detector 230 along the same optical path. The displacement detector 230 detects a displacement of the distal end of the cantilever 112, i.e., of the probe 111, on the basis of the guided light.

Illumination light emitted by an illumination optical system 250 strikes the dichroic mirror 240 from below. The illumination light that has struck the dichroic mirror 240 is transmitted through the dichroic mirror 240, then passes through the objective lens 210, and illuminates the specimen and the cantilever 112. Light reflected by the specimen and the cantilever 112 is guided to an observation optical system 260 along the same optical path. The observation optical system 260 acquires the observation image of the specimen and the cantilever 112 by a CCD video camera or the like. The acquired observation image is displayed on a display 270 such as a monitor displays.

A detection system schematically indicated by the laser source 220 and displacement detector 230 comprises the optical lever type optical sensor mechanism described with reference to, e.g., FIGS. 8 and 9. An optical system schematically indicated by the illumination optical system 250 and observation optical system 260 comprises the illumination light source lamp 4, half mirror 20, mirror 21, CCD camera 2, and the like described with reference to, e.g., FIG. 8.

Operation in a scanning probe microscope to which the stage described above is applied will be described.

The cantilever chip 110 is set in the cantilever holder in the following manner. The cantilever chip 110 is placed on the support surface 132 of the glass substrate 130 with the probe 111 directed upward. The operator pushes down the second end of the press member 120 with his fingers to raise the first end of the press member 120 upward. The support 113 of the cantilever chip 110 is inserted in the notch 122 at the first end of the raised press member 120. Insertion is performed completely until the support 113 abuts against the rear surface of the notch 122. This positions the cantilever chip 110 with good reproducibility, so the support 113 opposes the vibrator 138 through the glass substrate 130. After that, the operator releases his fingers. Thus, the press member 120 urges the support 113 against the glass substrate 130, fixing the cantilever chip 110.

After setting the cantilever chip 110, the peripheral portion of the probe 111 is filled with the liquid 194 such as a culture medium. The aberration caused by the thickness of the glass substrate 130 or the thickness of the liquid 194 has been corrected in advance by the correction ring 212 provided to the objective lens 210. In other words, prior to setting the holder to be used on the height adjustment stage 150, the correction ring 212 of the objective lens 210 is rotated to correct an expected aberration. Thus, the observation image obtained by the observation optical system 260 has a clear outline. The cantilever displacement detection laser beam forms a small spot well on the cantilever 112.

If the outline of the observation is not clear, this is because the focal point of the objective lens 210 and the position of the cantilever 112 are shifted in the direction of the optical axis. Thus, the height adjustment screw 155 is rotated to adjust the position of the cantilever 112 in the direction of the optical axis so that the outline of the cantilever 112 becomes clear.

If the spot of the cantilever displacement detection laser beam is not located on the cantilever 112, the adjustment screws 183 are rotated to move the cantilever chip 110 to come within the horizontal plane. The spot of the cantilever displacement detection laser beam is arranged on the cantilever 112, so that the amount of cantilever displacement detection laser beam reflected by the cantilever 112 becomes maximum.

By performing the above adjustment, the light reflected by the cantilever 112 always has an almost constant strength, so a good observation image can be obtained with good reproducibility.

After alignment of the spot of the cantilever displacement detection laser beam and the cantilever 112 is ended, an AC voltage signal is applied to the vibrator 138. The frequency of the AC voltage signal to be applied is preferably near the resonance frequency of the cantilever chip 110 in the liquid. When the vibrator 138 vibrates, this vibration propagates to the cantilever chip 110 through the glass substrate 130 to vibrate the cantilever 112 with a certain amplitude. Generally, in a liquid, it is difficult for the distal end of the cantilever 112 to obtain vibration amplitude due to the resistance of water or the like. According to this embodiment, however, the vibrator 138 and cantilever chip 110 are aligned with good reproducibility. Also, an object present between the vibrator 138 and cantilever chip 110 is only the glass substrate 130 having high Young's modulus. So, the vibration of the vibrator 138 propagates to the cantilever 112 efficiently without any attenuation. Thus, a stable vibration amplitude can be obtained.

Subsequently, the specimen stage 192 held by the X-Y-Z scanner 191 is arranged closely above the probe 111. To align the specimen stage 192 and probe 111, the X-Y-Z scanner 191 is moved within an inclined plane. According to the conventional apparatus, as shown in FIG. 10, since the upper surface of the transparent plate 32 is flat, when moving the specimen stage 23 within a plane inclined with respect to the upper surface of the transparent plate 32, the specimen stage 23 may undesirably interfere, i.e., come into contact with the upper surface of the transparent plate 32. In contrast to this, according to this embodiment, the side of the glass substrate 130 where the cantilever 112 of the cantilever chip 110 positioned and held by the holding mechanism extends is the inclined surface 134 that is inclined with respect to the support surface 132. Also, the specimen stage 192 is moved within a plane parallel to the inclined surface 134. Thus, the specimen stage 192 will not interfere with, i.e., come into contact with the upper surface of the glass substrate 130 at all.

As the support surface 132, inclined surface 134, and lower surface 136 of the glass substrate 130 are mirror-finished and provided with anti-reflection films, they are hardly adversely affected by noise generated by irregular reflection of the laser beam and illumination light.

As is apparent from the above description, in the scanning probe microscope according to this embodiment, the cantilever chip 110 is positioned easily with good reproducibility and high accuracy. Thus, after changing the cantilever chip 110, the distal end of the cantilever 112 is stably arranged within the observation view field. As the cantilever chip 110 is held at a position to oppose the vibrator 13 through the glass substrate 130, the mechanical coupling distance between the cantilever chip 110 and vibrator 138 is suppressed small. This suppresses the amount of vibration generated by the vibrator 138 that is absorbed until it is transmitted to the cantilever chip 110.

## Claims

1. A cantilever holder **characterized by** comprising:
a glass substrate (130) on which a cantilever chip (110) is to be placed;
a holding stage (140) to hold the glass substrate (130);
a vibrator (138) fixed to a lower surface of the glass substrate (130); and
a holding mechanism (120, 128, 144) to position and hold the cantilever chip (110) at a position opposing the vibrator (138) through the glass substrate (130), the holding mechanism (120, 128, 144) including a press member (120) to press the cantilever chip (110) against the glass substrate (130), and the press member (120) including a notch (122) that tightly fits with part of the cantilever chip (110).

2. A holder according to claim 1, **characterized in that**
the cantilever chip (110) includes a probe (111), a cantilever (112) supporting the probe (111) at an end thereof, and a support (113) supporting the cantilever (112), and
the glass substrate (130) includes a support surface (132) on which the cantilever chip (110) is to be placed, and an inclined surface (134) extending continuously from the support surface (132) and being inclined with respect to the support surface (132), the inclined surface (134) being located on a side of the support surface (132) where the cantilever (112) of the cantilever chip (110) positioned and held by the holding mechanism (120, 128, 144) extends from the support (113) and being inclined to a side where a distance from the probe (111) increases.

3. A scanning probe microscope holder **characterized by** comprising:
a glass substrate (130) on which a cantilever chip (110) is to be placed;
a holding stage (140) to hold the glass substrate (130);
a vibrator (138) fixed to a lower surface of the glass substrate (130);
a holding mechanism (120, 128, 144) to position and hold the cantilever chip (110) at a position opposing the vibrator (138) through the glass substrate (130), the holding mechanism (120, 128, 144) including a press member (120) to press the cantilever chip (110) against the glass substrate (130), and the press member (120) including a notch (122) that tightly fits with part of the cantilever chip (110);
a specimen stage (192) to hold a specimen;
a scanner (191) to scan the specimen stage (192);
an observation optical system (260) to observe the specimen including an objective lens (210), the objective lens (210) including a correction mechanism (212) to correct aberration caused by a thickness of the glass substrate (130) and by a liquid supplied onto the glass substrate (130); and
a position adjustment mechanism (150, 155, 160, 171, 172, 173, 174, 181, 183) to adjust a position of the holding stage (140) along an optical axis of the objective lens (210).
